# EUROPEAN PATENT APPLICATION

(11) **EP 1 842 876 A1**
(43) Date of publication of application: **10.10.2007**
(21) Application number: 05747168.2
(22) Date of filing: 04.05.2005
(51) Int. Cl.: C08L 23/02, C08L 23/10, C08L 23/04

(54) **THERMOPLASTIC POLYMER MATERIAL**

(30) Priority: 13.05.2004 RU 2004114489
(71) Applicant: Kulikov, Oleg Leonidovich, 85764 Oberschleissheim (DE)
(72) Inventor: Kulikov, Oleg Leonidovich, 85764 Oberschleissheim (DE)
(86) International application number: PCT/RU2005/000240
(87) International publication number: WO 2005/111142

(57) **Abstract**

The invention is directed on a reduction in price of the composition of a thermoplastic material, an increase in extrusion rate, an improvement in appearance and mechanical characteristics of the products. The specified objects are achieved by the use of a thermoplastic polymeric material comprising as a main component polyolefins, which can be subjected to "sharkskin" defects at increased rate of extrusion, and processing additives capable of delaying an onset of said defects in amount from 0.001 to 10 parts per hundred parts of the thermoplastic polymeric material, wherein said additives are selected from a group consisting of block copolymers of rigid polymers (A) and soft polymers (B), whereby the block copolymers having a structure of a linear block copolymer A(BA)ₙ , n>0, or (BA)ₘ , m>1, or whereby the block copolymers having a structure of a graft copolymer, wherein at least two side segments of rigid polymers (A) are grafted to a soft polymer (B), so that a total length of B is selected being above the total length of A, and wherein softening temperature of the block copolymers is above room temperature but below to processing temperature, and wherein the ratio of an elastic modulus to a viscous modulus of the additives, measured at the processing temperature and a specific frequency of the defects, is at least 20 % above or below to the corresponding value for the main component. 7 Claims, 8 Figures, 1 Table.

## Description

The present invention generally relates to compositions of polymer materials, comprising organic additives to improve processing by extrusion and more particular to the compositions based on polyolefin resins, and in particular, to polyethylene resins with additives of block copolymers. The invention can be used in manufacturing of a polymeric profile, an isolation coating at an electrical cable, a polymeric fiber, a pipe and a film produced by film blowing process that is by inflating of a pipe.

Examples of polyolefin resins include, but not restricted thereof to polymers and copolymers ethylene, propylene, butene, pentene, hexane, and also blends of these polymers. The invention with some restrictions can be used to improve extrusion processing of fluorinated polyolefin resins and blends of polyolefin resins with raw elastomers and peroxides, which cure by a free-radical mechanism of polymerization. Practically preferable materials are polyolefin resins produced with the use of metallocene catalysts. Polyolefin resins, made with metallocene catalysts, are characterized by narrow distribution of molecular weight of the polymeric chains, improved strength, toughness, transparency, and lower density but they are subject to surface defects known as "sharkskin" or "snakeskin" and "melt fracture". An onset of defects on a surface of products limits rate of plastics' processing.

Polyethylene is the most common polymer in industry. The polyethylene produced with metallocene catalysts, replaces ordinary linear low-density polyethylene (LLDPE) resins at the market of polymer films. By forecast of specialists the demand of metallocene based polyethylene will get 17 MM metric tons in year 2010 and will reach about a half of the total demand of this sort of plastics [1]. Polyethylene is used mostly to manufacture films (about 60 % from total amount) by a method of extrusion and a blown film process (inflating of a pipe). In extrusion of polyethylene with narrow distribution of molecular weight already at small rates of extrusion (about 10 mm per sec) the surface of the pipe gets roughness, and the thin film which is received by inflating of the pipe has lower gloss on reflection, also light scattering takes place, what reduces quality of the product for consumers. The increasing amount of polyethylene, polypropylene and their copolymers is used for fiber production. In extrusion of a fiber through a die screen its surface gets roughness the same way as in the extrusion of the film. The surface roughness of a fiber reduces its durability and mechanical strength.

There are several methods to eliminate surface roughness during extrusion of polyolefins, that are:
- Increasing of melt temperature.
- Local heating or cooling of the die walls in the die land area.
- Modification of the die geometry.
- Manufacturing of the die wall in the die land area from materials which have increased or reduced affiliation to the molten plastics, the use of corresponding coatings, or the use of corresponding inserts;
- The use of the additives which lower adhesion of thermoplastic material to walls.

The increase in temperature of molten polyethylene in manufacturing of a polyethylene film increases instability of a bubble to inflating by compressed gas and leads to non-uniform thickness of the film what is unacceptable in industry. Additionally, the increase in temperature of molten polymeric material leads to thermal decomposition, color inclusions in the material and loss of its mechanical strength.

Local heating of exit section of the die land area to temperature essentially higher than melting temperature of a polymeric material [2,3] or local cooling [4] complicate a design of the die.

The change in geometry of a die can correspond to an increase in the die gap along all length of the die land [5], or to a local increase in the die gap near the die exit [6,7], or to the use of the elongated die land. The increase in the die gap results in an increased blow ratio (inflating) of a pipe for manufacturing of a thin film and in uniaxial orientation of polyethylene molecules what reduces mechanical uniformity of the film and its stability to tear and wear. Thicker wall of the pipe simultaneously needs longer time for cooling what reduces productivity of machines. Longer die land area leads to higher pressure for extrusion of molten thermoplastic material what complicates the design of a press-extruder and makes it more costly.

Manufacturing of the die from materials with low affiliation to molten polymer, for example by covering its surface by fluorinated polymers, provides an increase to 3 - 5 times higher extrusion rate [8]. The idea to make the die land from or to cover the surface of the die land by the materials which increase adhesion of polyethylene to walls has been proposed in [9,10]. As an example of realization an improvement in quality of a polyethylene film has been demonstrated when the die land area was made from brass or nickel-phosphorus alloy. However, later it was shown in a work [11] that molten polyethylene does not stick but instead it slips along brass. Additionaly, manufacturing of a die land from soft materials is not rational.

The industry uses additives of fluorinated polymers [12]: "Viton® FreeFlow^{™}" from DuPont [13], "DYNAMAR" from Dyneon (3M) [14],"KYNAR" from Atofina Chemicals [15], which coat a surface of a die land during extrusion and provide slip of the melt along the metal surface, or the combinations of such fluorinated polymers with other additives, for example, with a powder of "dry lubricant" - BN [16]. Fluorinated polymers are inherently costly, their use increases cost of raw material and complicates hot welding of films by heating. The necessary amount of additives and cost of raw material considerably grows in the case of extrusion of polyethylene with inorganic pigments and antiblocking additives. Besides of the fluorinated hydrocarbons the additives of surfactants (surface active substances, detergents, salts and ethers of fat acids) were used to produce a product without defects [17]. The drawback of these technical solutions is in an insufficient increase in the rate of extrusion without defects.

The use of the block copolymers based on polysiloxanes and polyurethanes (TPSU) and three block copolymers of polycaprolactone and polysiloxane (TPCL-S) as additives in extrusion of polypropylene and polyethylene is known from [18], where it was shown that with the use of such additives in amount up to 5 % the output of extruder at constant torque increases from 81 to 200 g per minute for TPSU and from 81 to 180 g per minute for TPCL-S. There was no information about elimination of surface defects with the use of these additives.

By generalizing the analysis of analogues of the technical solutions of the prior art, it is possible to note, that cheap additives for thermoplastic polymer material based on polyolefins, which allow to increase considerably the rate of extrusion without defects, are not known, especially in the case of extrusion of the compositions comprising inorganic abrasive particles.

The closest to the present technical solution is the composition of a thermoplastic polymeric material comprising additives of siloxanes having structure of a linear diblock copolymer in a combination with adjuvant based on organophosphates which is characterized by higher adhesion to the die land material in comparison to the thermoplastic polymer [19]. The additives deposit on the die land surface and replace the main component so, that the layer of additives is formed at the surface.

The proposed invention is directed on reduction in price of the thermoplastic material composition, on an increase in extrusion rate, an improvement in appearance and mechanical characteristics of the final products.

The specified objects are achieved by the use of a thermoplastic polymeric material comprising as a main component polyolefins, which can be subjected to "sharkskin" defects at increased rate of extrusion, and processing additives capable of delaying an onset of said defects in amount from 0.001 to 10 parts per hundred parts of the thermoplastic polymeric material,
- wherein said additives are selected from a group consisting of block copolymers of rigid polymers (A) and soft polymers (B), whereby the block copolymers having a structure of a linear block copolymer A(BA)ₙ, n>0, or (BA)ₘ, m>1, or whereby the block copolymers having a structure of a graft copolymer, wherein at least two side segments of rigid polymers (A) are grafted to a soft polymer (B), so that a total length ofB is selected being above the total length of A, and
- wherein softening temperature of the block copolymers is above room temperature but below to processing temperature, and
- wherein the ratio of an elastic modulus to a viscous modulus of the additives, measured at the processing temperature and a specific frequency of the defects, is at least 20 % above or below to the corresponding value for the main component.

In a specific case of realization the specified objects are achieved by the use of a thermoplastic polymeric material of claim 1, characterized in, that the amount of the additives is selected from 0.01 to 10 parts per hundred parts of the thermoplastic polymeric material.

In another specific case of realization the specified objects are achieved by the use of the thermoplastic polymeric material of claim 1 or 2, characterized in, that at processing temperatures and at frequencies close to the specific frequency of said "sharkskin" defects the ratio of an elastic modulus (G1) to a viscous modulus (G2) of said additives (i.e. (G1/G2)|_{additives}) is higher than that of the main component (i.e. (G1/G2)|_{polymer}) and wherein a following condition is fulfilled ((G1/G2)|_{additives}) > K², where K = (G1/G2)|_{polymer}.

In a further specific case of realization the specified objects are achieved by the use of the thermoplastic polymeric material of claim 1 or 2, characterized in, that at processing temperatures and at frequencies close to the specific frequency of said "sharkskin" defects the ratio of an elastic modulus (G1) to a viscous modulus (G2) for additives (G1/G2)|_{additives} < 1.

In a further specific case of realization the specified objects are achieved by the use of the thermoplastic polymeric material of claim 1 or 2, characterized in, that the additives are selected from a group of block copolymers based on diisocyanates (polyurethanes).

In a further specific case of realization the specified objects are achieved by the use of the thermoplastic polymeric material of claim 1 or 2, characterized in, that the additives are selected from a group of block copolymers of diisocyanates (polyurethanes) and either siloxanes or fluorinated hydrocarbons.

In a further specific case of realization the specified objects are achieved by the use of the thermoplastic polymeric material of claim 6, characterized in, that the additives are selected from a group of block copolymers of aromatic diisocyanates.

In a further specific case of realization the specified objects are achieved by the use of the thermoplastic polymeric material of claim 1 or 2, characterized in, that the additives are selected from a group of block copolymers of aliphatic diisocyanates (polyurethanes) and polyesters or polyethers.

### Terminology

The term "a thermoplastic polymeric material" means a material comprising as the main component the polymers which are softening and getting plastic properties at heating to temperature below the temperature of their thermal decomposition. The thermoplastic polymeric material can comprise antioxidants, stabilizers which suppress an impact of ultraviolet radiation or action of heat, the additive to diminish accumulation of static electricity, organic and inorganic fillers, dyes, plasticizers, additives which prevent sticking of polymeric products, for example antibloking additives for polymeric film (including particles of quartz, diatomaceous earth and talc), additives which improve processing of polymers, organic dyes and inorganic pigments, the nucleation agents of crystallization of the polymeric material, the additive which provides impact toughness of brittle polymers, etc.

Any polymeric material at temperature above a glass transition point shows elastic properties for short processes and plastic properties for long lasting processes. To measure ratio between plastic and elastic deformation and to define dynamic properties of the material one deforms it periodically by applying sinusoidally changing load [20,21]. If F is the force applied to the surface area S in the direction parallel to this surface then shear stress is σ = F/S. Then shear deformation is Y=Y₀•SIN(ω•t). It is common in the art to characterize shear stress inside the material with the use of elastic modulus Gland viscous modulus G2. Then σ = σ₀•(G1•SIN(W•t)+G2•COS(ω•t).

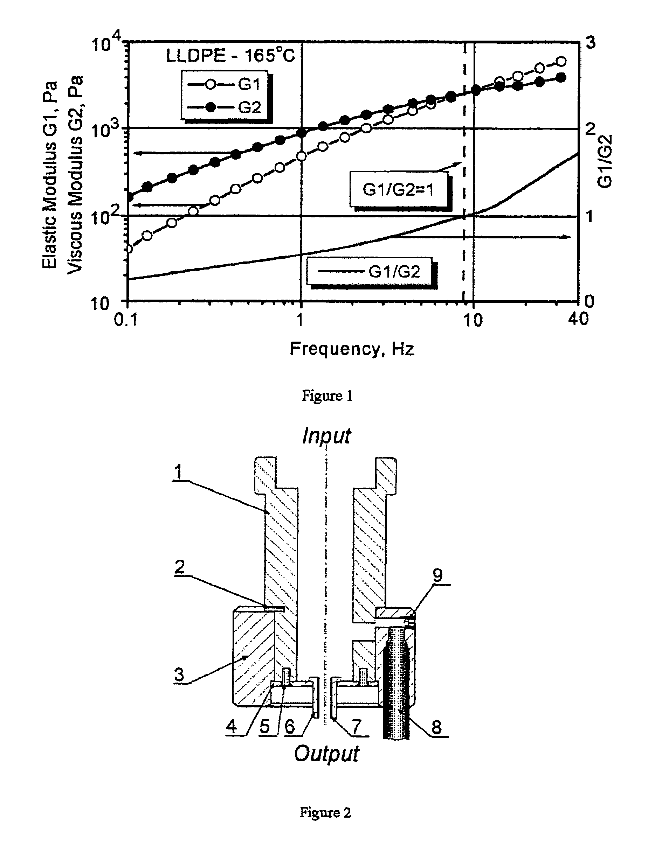

Plots of elastic modulus G1 and viscous modulus G2 versus frequency of the load f = ω/(2•π) are presented graphically on Figure 1 at temperature 165°C for linear polyethylene LL1201 XV which we used in examples of realization of the present technical solution. Mechanical properties of polyethylene have been measured by means of the device "Rheotest RT-20" manufactured by a company HAAKE-Thermo. Curves are crossing at frequency about 7 Hz. At low frequencies of the load the viscous modulus is higher than the elastic modulus that is the material behaves as a liquid. At high frequencies the viscous modulus is less than the elastic modulus, i.e. the material behaves as a solid elastic body. The ratio of the elastic modulus to the viscous modulus (G1/G2) can be used as a criterion of elasticity of the material.

Fabrication equipment for processing of thermoplastic polymeric materials is normally made of metals, for example, dies, die screens, pipes, body and screws of extruders. Usually used metals include instrumental and doped steel, stainless steel, bronze, copper, nickel. In addition, surface of metals can have coatings to reduce abrasive wear and corrosion, for example, galvanic coatings from chromium, platinum, and rhodium. The polymeric material is supplied to an input of the equipment for processing, for example, as granules, and comes out as a profile, a pipe, a fiber, a sheet, etc.

Molecules of polymers can be attached to a surface by means of covalent, Hydrogen and ionic bonds. A Hydrogen bond is an attraction of a Hydrogen atom which is bonded to an electronegative atom in one molecule to the electronegative atom in another molecule. Not polar molecules of polyolefins are attached to a surface by means of Van der Waals bonds. Block copolymers comprising, at least, one rigid segment with polar groups, adhere to a surface by means of strong Hydrogen bonds.

In a simple copolymer monomers of two types are mixed without order or alternate. In the block copolymer the monomers of the same type are connected in a long chain, and chains of two or more monomers are connected by the ends. Copolymers can show completely different properties for the same chemical composition but a different mutual order of the monomers. The block copolymers with one rigid block are used as surface-active agents to prepare suspensions and emulsions. The block copolymers with two (or more) rigid blocks are mostly used as thermoplastic elastomers (TPE or thermoplastic rubbers) and adhesives. In such systems the rigid segments group together in microphases (domains) in a matrix of the soft segments, similar to micelles in emulsions. Association of rigid segments into a microphase works as physical bonding for soft segments of the polymeric chain and provides elasticity to the material. At increased temperature the microphases or domains of the rigid segments are softening what makes possible to process thermoplastic elastomers similar to a normal thermoplastic material.

However, at small increase of temperature above the softening point of rigid segments, the rigid segments stay together (in a micelle) because they are incompatible with soft segments. That increases the ratio of the elastic modulus to the viscous modulus for TPE in comparison to homogeneous polymers. At further higher temperature the micelles break apart. The block copolymers with number of blocks more than two can be of linear structure or of the structure of a graft copolymer, when rigid segments are grafted to a soft polymeric chain.

Historically polyurethanes were the first block copolymers and now it is the biggest and most fast-growing part of the market of the block copolymers. Polyurethane block copolymers consist of soft and rigid segments. Soft segments of polyurethanes are polyethers, polyesters or polyglycols with molecular weight from 500 to 5000 a.u. Rigid segments are aromatic or aliphatic diisocyanates in connection with low molecular weight diol or diamine. The combination of these soft and rigid segments forms a block copolymer of the type (AB)ₙ, where n > 1. Polyurethanes show a two-phase domain microstructure because of chemical incompatibility between soft and rigid segments. In the case of polyurethanes rigid segments group in semi crystalline domains, while soft segments form an amorphous matrix around them. Phase separation between segments and elastic properties of the block copolymers are noticeable only if the length of soft segments exceeds that of rigid segments in the block copolymer and it grows as the length of soft segments and their molecular weight increases.

Association of rigid segments in micro-domains provides physical bonding between molecules. Apart of physical bonding between molecules polyurethanes possess strong Hydrogen bonds. The temperature of softening of polyurethane block copolymers varies in a wide range by the choice of rigid segments. Properties of the elastomers based on polyurethanes and their chemical structure are disclosed in details in technical literature, for example [22,23].

Various lubricants and additives are widely used to improve processing of thermoplastic polymers by extrusion. Polymer Processing Aids for extrusion may be used, for example, to accelerate fusion of particles of polyvinyl chloride (PVC) in an extruder and to improve melt uniformity and homogeneity. Acceleration of fusion is caused by increased heating of the polymeric blend due to elimination of slip of the polymeric material in the extruder while the lubricating additives provide slip.

The additives of block copolymers comprising soft segments which are not compatible with matrix and rigid segments which are compatible with the matrix are used to improve impact toughness of brittle polymers. The soft segments are usually characterized by temperature of glass transition which is below room temperature while the rigid segments are characterized by temperature of glass transition which is above room temperature. In blending of the additives with molten polymeric matrix the soft segments group in droplets with the size from 50 to 1000 nanometers, while the rigid segments form a shell around which is connected to the polymeric matrix. There is a reason to believe that at room temperature the rigid shell transfers elastic energy of impacts to the elastic and soft core where this energy is absorbed and transformed to heat. Elastic properties of the core get improved and the necessary amount of additives in the polymeric composition lowers as both molecular weight and the ratio of soft segments to rigid ones increase.

As it is shown below in Example 1, at extrusion of polyethylene at temperature 165°C the surface defects appear at a specific frequency of about 20 Hz. The frequency of defects varies with change of geometry of processing only a little and, mostly, it depends on temperature of processing. Not restricting ourselves by a theory, it is possible to explain the probable reason of the defects onset as following. It is known, that after exit from a die a surface layer of a polymeric material is stretched. It is because of friction its speed inside the die is small and after the die exit it grows to the velocity averaged in the cross section of the flow. The stretching of the surface layer after the die exit leads to reduction in its thickness and to the instability of a detachment point of the flow from the die surface so that the point of detachment from the wall can be shifted upstream, i.e. inside the die.

An onset of the defects could be explained as manifestation of elastic oscillations of the material with detachment of the flow from the die wall near its exit (adhesion failure). This adhesion failure propagates as a microcrack inside the die along its wall. The flux of elastic energy from the deformed surface layer to the tip of the microcrack accelerates its propagation. Then the crack deviates from the wall and ruptures a polymeric material (cohesion failure). The deviation of the crack from the wall can be caused by an instability of the linear crack at high velocity and also by the fact that the surface layer of the polymeric material gets stretched already inside the die near its exit, therefore the microcrack deviates to the source of elastic energy. The microcrack in the surface layer of the polymeric material which appears inside the die flows outside in the process of extrusion and develops there into a macrocrack.

Surprisingly we have discovered, that additives of block copolymers having structure of thermoplastic elastomers in a blend with polyolefins increase rate of extrusion of the polyolefins without defects in proviso that the ratio of elastic modulus to viscous one at the specific frequency of the defects for the additives differs noticeably from the corresponding value for thermoplastic polymer. Hypothetically the increase in extrusion rate without defects occurs in two following mechanisms:
- First, with the use of additives which are characterized at the processing temperature and frequency of instability f by higher elasticity (at least, 20 % higher) than that of the main polymeric material, i.e. (G1/G2)|_{additives} > 1.2 •(G1/G2)|_{polymer}, deposition of the elastic additives on the wall results in an elastic coating. Microcracks which propagate along the elastic coating deformed by shear, do not deviate from the wall as the coating is a source of elastic energy. As a result of propagation of the microcrack of shear the melt gets shifted along the boundary. Slip velocity corresponds to the sum of the shifts in a time unit [24]. The microcracks of shear propagate along the boundary therefore thickness of the elastic coating is not so important in comparison to its length and the coating shows elastic properties even at thickness about 60 nanometers.
- Second, with the use of additives which possess low elasticity in comparison to the polymeric material (at least, on 20 % less), i.e. (G1/G2)|_{additives} < 0.8 • (G1/G2)|_{polymer}, the microcracks do not propagate along the surface of the die. The additives based on block copolymers having low elasticity fasten a molten polymeric material to the wall and prevent its eruptive detachment near the die exit.

At the frequency of instability the melt is characterized by a ratio of elastic modulus to viscous modulus (G1/G2)|_{polymer} = K. The value of K can be taken as a parameter of elasticity at the specific frequency of defects. In the case of extrusion of polyethylene LL1201 XV at temperature 165°C and for the steel die 6•32 mm, which is used in an example 1, K=1.4. Improvement in the rate of extrusion without defects would be especially large if for the additives one of the following conditions will be fulfilled: (G1/G2)|_{additives} < 1 or (G1/G2)|_{additives} > K².

The additives of the block copolymers deposit at the surface in the process of extrusion and replace polyolefins there because adhesion of the block copolymers to the surface is higher than adhesion of not polar polyolefins. Elastic coatings promote propagation of microcracks of shear along the coating while not elastic coatings suppress their propagation. In both cases rupture of polymer inside the die, which appears outside the die as "snakeskin" and "sharkskin" defects, is suppressed. Propagation of shear cracks is especially advantageous if molecules of the additives are not compatible thermodynamically with polyolefin resins. Block copolymers of polyurethanes are characterized by high adhesion to surface and tear strength therefore the choice of them as additives is preferable. The choice of aromatic diisocyanates instead of aliphatic ones is preferable for rigid segments. For soft segments it would be better to take siloxanes or fluorinated hydro-carbonates.

Siloxanes contain two or more atoms of Silicone bonded by means of one or more atoms of oxygen. Polysiloxanes with structure of polydimethylsiloxane and polymetylphenylsiloxane are available commercially. Polydimethylsiloxanes and polymetylphenylsiloxanes have very flexible (soft) molecular chain because adjacent bonds between Silicone and Oxygen atoms could change angle between them similar to scissors. These polymers are characterized by extremely low glass transition point (-123°C and -86°C, correspondingly). Morphology and mechanical properties of the block copolymers of polydimethylsiloxane with polyurethane as well as with urea are disclosed in technical literature [25-28]. Perfluorinated polyethylene is known under trademark Teflon and also characterized by low glass transition point (-73°C). So, thermoplastic elastomers based on block copolymers of aromatic diisocyanate (polyurethane) and siloxane or fluorinated polyethylene, which have better elasticity in comparison to polymer matrix at processing temperature, have to provide good results if being used as elastic additives.

Not elastic coatings suppress propagation of cracks better if they are thermodynamically better compatible with polyolefin resins. Aliphatic hydrocarbons as rigid segments are more compatible thermodynamically with polyolefin resins while polyethers are a better choice for soft segments. The use of polyesters could be justified to improve adhesion of additives to metal. So, block copolymers of aliphatic diisocyanates (polyurethanes) with polyethers and polyesters have to give good results, which have less elasticity in comparison to polymer matrix at the specific frequency of defects. In a general case polyethers or polyesters could have melting point above room temperature and therefore the block copolymers of diisocyanates and of such polyethers or polyesters will be not elastic at room temperature. So, they differ from thermoplastic elastomers and they are used in industry as glue or adhesive compositions.

In extrusion technique the additives are used as concentrated master batches with polymeric material and the granules of the concentrate are dosed gravimetrically and mixed with the granules of the polymer material in an extruder. Compounding of concentrated blends with a mass fraction of additives from 1 to 10 parts to hundred allows to optimize the size of inclusions in the polymer material. The concentrated blends of additives with polymers could be used also for quick coating of the fabrication equipment. It is advantageous to use for preparation of the concentrate the same polymers, which are the base of the thermoplastic material, but in a general case another material could be used for preparation of the concentrated blends. For example, the concentrated master batches with additives (from 1 to 10 parts to hundred) based on low density polyethylene (LDPE) resin which is not subject to defects during extrusion can be used for dry gravimetric dosing of the additives during extrusion of linear low density polyethylene (LLDPE) resin which is prone to defects during extrusion.

Deposition of additives at the surface of the fabrication equipment occurs in areas of sharp contraction of the flow. The size of the inclusions has to be not too small (that is not less than 0.1 microns) because it lowers the rate of deposition of the additives on the walls of the fabrication equipment. At the optimal size of inclusions (that is from 0.1 to 10 microns) content of the additives in the thermoplastic material cannot be lower that 10 parts per million or more than 1 part per hundred. Really, efficiency of deposition of the additives grows as the inclusions increase in size [29]. If the content of additives is lower than 10 parts per million then for the optimal size of inclusions deposition of the additives at the surface occurs non-uniformly. The content of the additives above 1 part per hundred leads to excessively thick layer of the additives at the surface. Therefore concentrated blends have to be used either for preliminary coating of equipment or for dry gravimetric dozing of additives with thermoplastic polymer material.

The essence of the proposed invention is additionally clarified by graphic materials and examples of realization. In Figure 1 plots of elastic modulus G1 and viscous modulus G2 of linear low-density polyethylene LL1201 vs, frequency f = W /(2•π) are presented for temperature 165°C. In Figure 2 a set-up to fasten a die to the press-extruder is presented schematically. In Figure 3 a characteristic flow curve of extrusion is presented for the use of the die from steel as well as measured values of the specific frequency of sharkskin defects. In Figure 4 characteristic flow curve is presented for the use of a glass die as well as measured values of the specific frequency of sharkskin defects. In Figure 5 the characteristic flow curves are presented for the use of the steel die with elastic coatings by thermoplastic elastomers. Onset of extrusion defects at the curves is marked by a cross in a circle. In Figure 6 the curves of the ratio of an elastic modulus to a viscous modulus at temperature 165°C are presented for polyethylene and the thermoplastic elastomers based on polyurethanes and polysiloxanes. In Figure 7 the characteristic flow curves received with the use of a steel die and of not elastic coatings by thermoplastic elastomers are presented. In Figure 8 the curves of the ratio of an elastic modulus to a viscous modulus of polyethylene and thermoplastic elastomers based on polyurethanes and polyesters at temperature 165°C are presented. In the Table 1 the values of the critical extrusion rate are presented at which an onset of defects at the surface of polyethylene occurs.

### EXAMPLE 1.

Extrusion of polyethylene LL1201 XV from a company ExxonMobil [30] was done with the use of the die without any coating. The set-up to fasten the die to a press-extruder is presented schematically in Figure 2. The set-up consists of a bearing body 1 with accessories to attach it to the extruder, an assembling pin 2, an iron ring 3 fixed at the bearing body 1, a ring plate 4 to bear the die, screws 5 to fasten the ring plate 4 and the iron ring 3 to the bearing body 1, a tubular die 6 for extrusion of rods. A coating 7 at the inner side of the die could be from metal oxides to enhance adhesion of elastomers to metal or the layer of elastomers. The set-up contains a pressure transducer 8 and a plug screw 9. Molten polyethylene is shown by grey color.

The used polyethylene is characterized by the following parameters: density - 0.926 g per cm³, melting point - 123°C, melt index - 0.7 g per 10 minutes, the temperature recommended for extrusion by the manufacturer- from 180 to 200°C. A ram extruder from a company Loomis [31] was used with a barrel 60 mm diameter, length- 200 mm and maximal pressure in the barrel 400 bar. The piston of the extruder was actuated by a hydraulic cylinder. The barrel was equipped with the heaters providing temperature up to 210°C, and the temperature of walls of the barrel was measured by a thermometer - thermocouple. Heating of the die was provided with an additional heater with measurement of temperature by a thermometer - thermocouple. In addition, temperature of the outcoming product as well as temperature of the die was measured by a contactless thermometer - pyrometer. Pressure in the barrel was measured by a pressure transducer with accuracy 0.5 % in the range from 0 to 100 bar. The piston displacement was controlled by a computer while its position was measured with precision 5 microns.

Electric signals from the position and pressure transducers were transformed to digital signals with accuracy of 24 bit and every 0.6 s were transferred to serial ports of the computer. Control of extrusion parameters and records of the data were arranged with the use of a software package "LabView 6.0" and the computer Pentium 4. The product leaving the die was recorded by a digital television camera SONY Digital 8 DCR-TRV110E with frequency 25 frames per second. Illumination of the product was carried out by a stroboscope synchronized with the television camera to prevent smear of the image because of motion of the product. The records started simultaneously with the extrusion, therefore the onset of defects on the product surface could be correlated precisely with velocity of the product.

First, we used a transparent glass die. The product coming out the glass die at small velocities was characterized by an even glossy surface, then we observed onset of periodic surface defects. At increase in extrusion rate the scale of defects increased both in length, and in amplitude of the relief. At velocities above 100 mm per sec the sections of the product with defects were interleaving by the sections of glossy surface and the product appearance was similar to a bamboo trunk. With crossed polarizes at the moment of the defects' onset we observed an appearance of a bright spot with length 0.5 mm along flow axis, which was an indication on preferential orientation of the polymer molecules. The critical velocity of the defects' onset at temperature 165°C was 5.6 mm per sec. The preferential orientation of polymer molecules is a manifestation of the material stretching near the die exit.

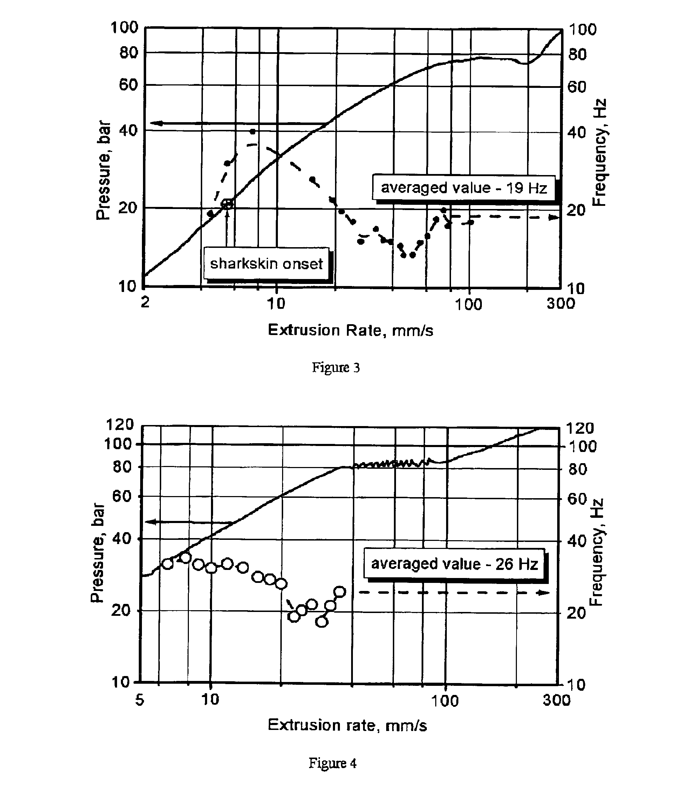

Then we made extrusion of molten polyethylene at temperature 165°C through a tubular die of 6•32 mm from stainless steel. Before an experiment the die was heated up in open flame to temperature about 600°C to burn out all organic pollution, which could be present on its wall and to create a layer of oxide at its surface. First, we made extrusion during 30 minutes at average rate about 1 mm per sec to get an equilibrium thermal and mechanical status of the device, and then we did extrusion with a ramp in rate from 1 to 400 mm per sec. The resulting characteristic flow curve is presented in Figure 3 by a continuous line. At low velocities of extrusion the product had a smooth surface, then for velocity about 4.5 mm per sec it began to scatter light, and for the velocity above 5.4 mm per sec the specific defects like "sharkskin" appeared. An onset of defects is marked at the curve by a cross. With increase in extrusion rate both period and amplitude depth of the defects increased similar to the case of extrusion through a glass die.

Frequencies of a surface relief on a product were measured in [Hz], i.e. the ratio of extrusion rate in [mm per sec] to the period of a surface relief in [mm], and presented in Figure 3 by a dotted line. We have observed pressure oscillations and large scale product imperfections at velocities above 100 mm per sec. Apparent frequencies of the defects on small velocities and at velocities higher than 100 mm per sec are close. These observations testify for an explanation, that surface defects appear because of periodic transitions of the flow near the die exit from sticking to slip.

As it is shown at the plot, the specific frequency of defects varies only a little around some averaged frequency which varies between 19 and 20 Hz for the steel die as extrusion rate increases. The ratio of an elastic modulus to a viscous modulus (G1/G2) for polymer at frequency 20 Hz is about 1.4. For comparison a flow curve and apparent frequencies of "sharkskin" defects measured with the use of a glass die 3.3•24 mm are presented in Figure 4. As it is shown in this Figure the specific frequency of defects varies a little (from 20 to 26 Hz).

### EXAMPLE 2.

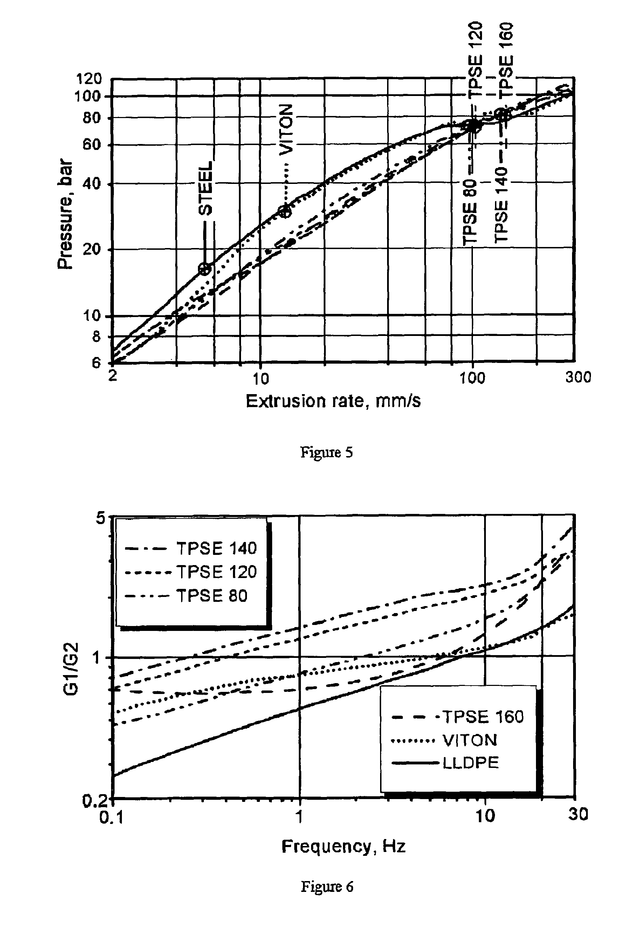

After every experiment the extruder was cleaned from the residues of polyethylene while the die was detached and heated in open flame the same way as it was described above. After cooling below to the temperature 200°C the die was loaded by additives till the material of additives was molten and filled the volume of the die. The die was under heating in the process. Then the extruder barrel was filled by polyethylene and was maintained so at least 8 hours till thermal equilibrium was established. Then the die was attached to the extruder and extrusion was done during 30 min with rate of extrusion about 1 mm per sec to squeeze elastomers out of the die, to reduce thickness of the layer and to smooth the layer of elastomer at the surface. The characteristic flow curves received with the use of fluorinated polymer "Viton® FreeFlow^{™} SC-PW" and thermoplastic elastomers TPSE-160, TPSE-120, TPSE-80 from Wacker Chemie are presented in Figure 5. The onsets of defects are shown at every curve by crosses. Thickness of the coating was evaluated after extrusion experiment by measuring of electrical capacity between a steel die and saturated solution of Sodium Nitrate in water.

The plots of ratio of an elastic modulus to a viscous modulus G1/G2 versus frequency f = ω/(2•π) are presented in Figure 6 for polyethylene LL1201, elastomers TPSE-160, TPSE-120, TPSE-80 and fluorinated polymer "Viton® FreeFlow^{™} SC-PW". In Table 1 the results of measurements of the critical velocity when surface defects appear as well as the ratio of an elastic modulus to a viscous modulus G1/G2 at frequency f = 20 Hz are presented. It is possible to see a general tendency that the extrusion rate without defects increases as the elastomer is more elastic in comparison to molten polyethylene at frequency about 20 Hz is taken.

### EXAMPLE 3.

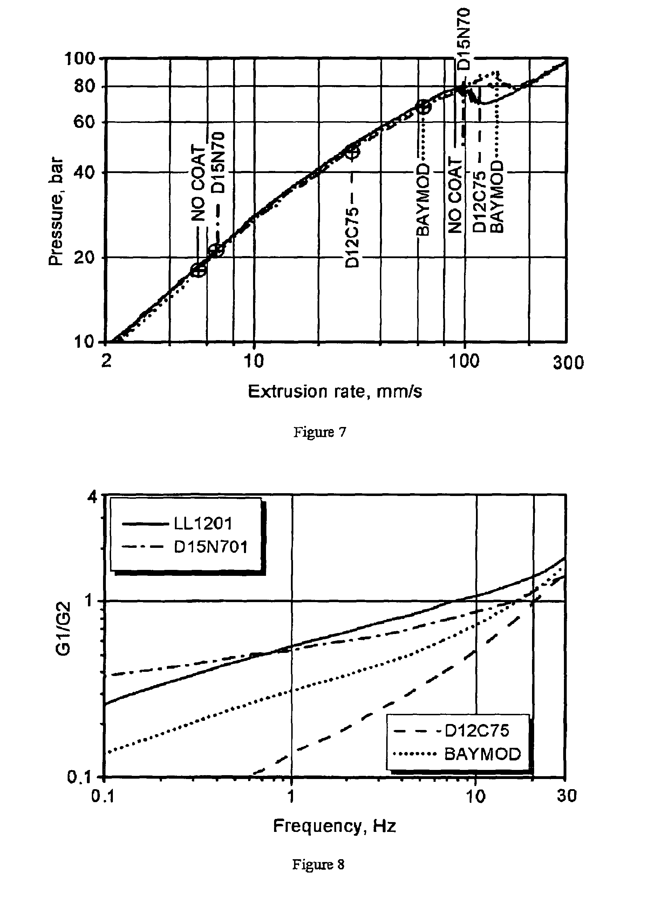

In a similar way as it is described above, the die was filled by elastomers "D12C75", "D15N70", from Mentquisa, "Baymod PU-A" from Bayer and then extrusion was done. Characteristic flow curves are shown in Figure 7. There was no detected pressure drop, i.e. no slip of the molten polyethylene along a surface of the die in the limits of measurements' accuracy. The onset of defects on a surface of the product is shown by a cross at each curve. Plots of ratio of elastic modulus G1 to viscous modulus G2 versus frequency of load f= ω/(2•π) for linear polyethylene LL1201 and elastomers "D12C75", "D15N70" and " Baymod PU-A" at temperature 165°C are graphically presented in Figure 8. A moment of sharp change in pressure, i.e. transition to slip, is shown at the curves by a direct vertical line.

As it is shown in Figure 8 the drop in pressure, which occur because of the macroscopic stick-slip transition along the die, happens especially later when the extrusion rate without defects is higher. It is an additional evidence that the proposed inelastic additives fasten molten polymer to the die wall. In Table 1 the results of measurements of the coating thickness after extrusion experiment, critical rate of extrusion when defects occur at the product surface as well as ratio G1/G2 at frequency 20 Hz are presented. It is possible to see that the rate of defect-free extrusion increases as elastomer with lower elasticity at frequency about 20 Hz in comparison to polyethylene melt is taken.

**Table1**

| Coating | Thickness in microns | Critical rate for the defects onset, mm per sec | G1/G2 @ 20 Hz |
|---|---|---|---|
| No coating | - | 5.4 | K≈1.4 |
| VITON | 0.07 | 13 | 0.7 •K² ≈ K |
| TPSE-80 | 0.45 | 98 | 1.22 • K² |
| TPSE-160 | 0.09 | 142 | 1.22 • K² |
| TPSE-120 | 0.64 | 103 | 1.38 • K² |
| TPSE-140 | 0.36 | 136 | 1.53 • K² |
| D15N70 | n/a | 18 | 0.81 • K ≈ 1.14 |
| D12C75 | 0.08 | 47 | 0.71 • K ≈ 1 |
| Baymod PU-A | n/a | 68 | 0.51 • K ≈ 0.72 |

### Example 4

In a similar way as it is described above the die was cleaned and the barrel of the extruder was filled by a blend of elastomer "TPSE-160" from Wacker Chemie with polyethylene, and then extrusion was done. The blend was produced in a following way. Thermoplastic elastomer was dissolved in hot isopropanol in concentration about 5% and the prepared solution was poured out in a polyethylene bag with 1 kg of polyethylene granules. Then granules were mixed and dried from the isopropanol by a jet of compressed air. Thermoplastic elastomer coats the surface of granules and of a plastic bag by dry spots of irregular shape of size from 1 to 100 microns.

The granules were loaded into the extruder as it is described above. We made extrusion at velocity about 50 mm per sec and observed how defects disappear in the extrusion process. First, free from defects streaks appeared at the product surface and then the area free from defects grew in time before full disappearance of the defects at the surface. At content of the additives about 100 parts per million it was necessary to extrude about 10 m of product to get rid of the defects. At content of the additives 200 parts per million - 4 m. At content 2000 parts per million the defects disappeared after extrusion of 0.5 m of product.

Induction time or product length, which is necessary to extrude before the defects disappear, depend on content of the additives about inversely and for acceleration of the coating procedure it is possible to make first extrusion with high amount of the additives and then to lower content of the additives. The content of additives 100 parts per million, at which we have observed extrusion without defects, is approximately 4 times less than the recommended concentration of fluorinated additives used nowadays. The obtained data also show that some impact of additives could be observed even at the additives content 10 parts per million.

So, the present technical solution suggests to use block copolymers, which are commercially available and used to manufacture footwear and to enlarge impact toughness of brittle polymers, for the purpose to increase rate of extrusion without defects. The proposed additives, and first of all those which are based on polyurethanes can be a cheap substitution of the state of art additives based on fluorinated polymers.

To experts it has to be clear that the present technical solution may be not limited by polyolefins, but efficiently could be used also in extrusion of film and fibers from other polymers, proteins and viscose, which are subject to defects during processing. The layer of additives, which coats metal surface, also helps to reduce corrosion of a metal die or a die screen because of decomposition of the polymer material or because of a contact of the die with liquids in coagulation baths.

It is necessary to note, that from the level of art it does not follow in an obvious manner, that with the use of block copolymers comprising both rigid and soft segments as well as possessing certain mechanical properties, the rate of extrusion rate without defects increases. The phenomenon of suppression of the defects during extrusion of polyethylene with additives of the block copolymers was not known from any patent and special technical literature. Therefore, the present technical solution satisfies the requirement of an "inventive step".

So, the present technical solution is new, it satisfies the criterion of an "inventive step", it is industrially applicable and hence it is characterized by all necessary criteria of invention.

References:
1. V.T. Ponomareva, N.N. Lihacheva, Institut neftechemicheskogo cinteza im. A.V. Topchieva, "Proizvodstvo plastmass na osnove metallotzenovih katalizatorov", Plasticheskie massi, 2001, No. 4
2. U.S. Patent No. 6,124,428; Schmieg Joel Edward et al.; September 26, 2000, "Method of processing polyethylene and polyethylene/ elastomer blends", U.S. Class: 528/487, IPC: C08K 005/42; C08L 023/04
3. U.S. Patent No. 4,485,062; Dawes James W., et al.; November 27, 1984, "Process for extruding polymers", U.S. Class: 264/173.19; IPC: B29F 003/06
4. U.S. Patent No. 5,089,200; Chapman Jr.; et al.; February 18, 1992, "Process for melt extrusion of polymers", U.S. Class: 264/127, IPC: B29C 047/94
5. U.S. Patent No. 5,008,056; Kurtz Stuart J., et al.; April 16, 1991 "Reduction in die drool in filled resins and product improvement", U.S. Class: 264/130, IPC: B29C 047/12
6. U.S. Patent No. 4,484,883; Honda; Yukio , et al.; November 27, 1984, "Multi-layer extrusion die", U.S. Class: 425/462, IPC: B29F 003/08
7. U.S. Patent No. 4,769,418; Mizuno Hajime et al.; September 6, 1988, "Propylene polymer film", U.S. Class: 525/106, IPC: C08F 006/02; C08F 297/02
8. Kissi, et al., "Effect of surface properties on polymer melt slip and extrusion defects", Journal of Non-Newtonian Fluid Mechanics, 52 (1994) 249-261
9. http://www.dowcorning.com/content/plastics/default.asp
10. US. Patent No. 4,692,379; Keung Jay K. , et al. September 8, 1987 "Heat sealable film and method for its preparation", U.S. Class: 428/349 IPC: B32B 027/00
11. V.G. Ghanta, B.L. Riise, M.M. Denn, "Disappearance of extrusion instabilities in brass capillary dies", J. Rheol., 43 (1999) 435-442.
12. U.S. Patent No. 3,125,547; Phillip Strubing Blatz; Mar. 17, 1964, "Extrudable composition consisting of a polyolefin and a fluorocarbon polymer"
13. http://www.dupont-dow.com/products/vitonff/vitonff.asp
14. http://cms.3m.com/
15. http://www.AtofinaChemicals.com
16. US Patent Application No. 20010048179, C.W. Stewart, et al., "Extrusion aid combination", December 6, 2001, U.S. Current Class: 264/211, IPC: B29C 047/00
17. US Patent Application No. 20020063359, J.B. Williams, et al., "Melt processing additives for extrusion of polymers", May 30, 2002, U.S. Class: 264/211, IPC: C08K 005/09
18. E.Yilgor, S.Suzer, I.Yilgor, "Modification of Polyolefins with Silicone Copolymers. I. Processing behavior of PP and HDPE blended with Silicone Copolymers", Journal of Applied Polymer Science, 83 (2002) 1625-1634.
19. U.S. Patent No. 4,925,890; Leung Pak S., et al.; May 15, 1990, "Process for processing thermoplastic polymers", U.S. Class: 524/133, IPC: C08L 053/00.
20. A.Yu.Grosberg, A.R.Hohlov, Phisica v mire polymerov, M., "Nauka", 1989.
21. A.Yu.Grosberg, A.R.Hohlov, Statisticheskaya Physica Polymerov, M., "Nauka", 1989.
22. A.Noshay, J. E. McGrath, Block Copolymers: Overview and Critical Survey, Academic Press, New York, 1977.
23. G. Oertel, Ed., Polyurethane Handbook, 2nd Edit., Hanser, New York, 1993.
24. E. Gerde, M. Marder, Nature, 413 (2001) 285.
25. http://scholar.lib.vt.edu/theses/available/etd-72698-13572/unrestricted/Disswh12.pdf
26. U.S. Patent No. 3,562,352, Emery Nyilas, "Polysiloxane-Polyuretane block copolymers", Feb. 9, 1971, U.S. Class: 260-824, IPC: C08G 41/04.
27. U.S. Patent No. 6,291,587, Bleys Gerhard Jozef, et al. Sep.18, 2001, "Elastomers from compositions comprising rigid thermoplastic polyurethane", U.S. Class: 525/131, IPC: C08L 009/00.
28. U.S. Patent No. 6,627,724, Gordon Francis M., et. al., "Polysiloxane-comprising polyuretane elastomeric compositions", Sep. 30, 2003, U.S. Class: 528/26, IPC: C08G 77/458.
29. S.B. Kharchenko, P.M. McGuiggan, K.B. Migler, "Flow induced coating of fluoropolymer additives: development of frustrated total internal reflection imaging", Journal of Rheology, 47 (2003) 1523-1545.
30. http://www.exxonmobil.com/chemical
31. http://www.loomisproducts.com

## Claims

1. Thermoplastic polymeric material comprising as a main component polyolefins, which can be subjected to "sharkskin" defects at increased rate of extrusion, and processing additives capable of delaying an onset of said defects in amount from 0.001 to 10 parts per hundred parts of the thermoplastic polymeric material,
- wherein said additives are selected from a group consisting of block copolymers of rigid polymers (A) and soft polymers (B), whereby the block copolymers having a structure of a linear block copolymer A(BA)ₙ, n>0, or (BA)ₘ, m>1, or whereby the block copolymers having a structure of a graft copolymer, wherein at least two side segments of rigid polymers (A) are grafted to a soft polymer (B), so that a total length of B is selected being above the total length of A, and
- wherein softening temperature of the block copolymers is above room temperature but below to processing temperature, and
- wherein the ratio of an elastic modulus to a viscous modulus of the additives, measured at the processing temperature and a specific frequency of the defects, is at least 20 % above or below to the corresponding value for the main component.

2. Thermoplastic polymeric material of claim 1, **characterized in, that** the amount of the additives is selected from 0,01 to 10 parts per hundred parts of the thermoplastic polymeric material.

3. Thermoplastic polymeric material of claim 1 or 2, **characterized in, that** at processing temperatures and at frequencies close to the specific frequency of said "sharkskin" defects the ratio of an elastic modulus (G1) to a viscous modulus (G2) of said additives (i.e, (G1/G2)|_{additives}) is higher than that of the main component (i.e. (G1/G2)|_{polymer}) and wherein a following condition is fulfilled ((G1/G2)l_{additives}) > K², where K = (G1/G2)|_{polymer}.

4. Thermoplastic polymeric material of claim 1 or 2, **characterized in, that** at processing temperatures and at frequencies close to the specific frequency of said "sharkskin" defects the ratio of an elastic modulus (G1) to a viscous modulus (G2) for additives (G1/G2)|_{additives} < 1.

5. Thermoplastic polymeric material of claim 1 or 2, **characterized in, that** the additives are selected from a group of block copolymers based on diisocyanates (polyurethanes).

6. Thermoplastic polymeric material of claim 1 or 2, **characterized in, that** the additives are selected from a group of block copolymers of diisocyanates (polyurethanes) and either siloxanes or fluorinated hydrocarbons.

7. Thermoplastic polymeric material of claim 6, **characterized in, that** the additives are selected from a group of block copolymers of aromatic diisocyanates.

8. Thermoplastic polymeric material of claim 1 or 2, **characterized in, that** the additives are selected from a group of block copolymers of aliphatic diisocyanates (polyurethanes) and polyesters or polyethers.
